# FASCICULE DE BREVET EUROPEEN

(11) **EP 1 489 325 B1**
(45) Date de publication et mention de la délivrance du brevet: **19.07.2006**
(21) Numéro de dépôt: 04290822.8
(22) Date de dépôt: 29.03.2004
(51) Int. Cl.: F16D 23/14

(54) **Butée de débrayage**
Ausrücksvorrichtung
Clutch release device

(30) Priorité: 18.06.2003 FR 0307356
(43) Date de publication de la demande: 22.12.2004
(73) Titulaire: Aktiebolaget SKF, 415 50 Göteborg (SE)
(72) Inventeur: Arnault, Benoît, 37540 Saint-Cyr sur Loire (FR)
(74) Mandataire: Dossmann, Gérard

(56) Documents cités:
- EP-A- 0 399 855
- EP-A- 1 146 244
- FR-A- 2 577 291
- FR-A- 2 611 244

## Description

La présente invention concerne le domaine des butées de débrayage destinées à agir sur le diaphragme d'un embrayage, en particulier pour un véhicule automobile.

L'invention s'applique aux butées de débrayage comprenant un roulement dont une des bagues est tournante et l'autre bague est fixe.

Entre la bague tournante et la bague fixe sont disposées des billes régulièrement réparties dans le sens circonférentiel au moyen d'une cage, la bague tournante étant munie d'une surface d'attaque sensiblement radiale destinée à venir en contact avec l'extrémité des doigts composant le diaphragme de l'embrayage. Un élément de manoeuvre supporte le roulement et, sous l'action d'un organe de commande (mécanique, électrique ou hydraulique), vient déplacer axialement le roulement de butée contre le diaphragme de l'embrayage.

Le document WO 02/052163 décrit une butée pour embrayage de véhicule automobile équipée d'un piston mobile axialement et une bague accrochée sur le piston à l'aide de moyens élastiques de pincement à effet axial. Une face de la bague prend appui sur une face d'accrochage ménagée dans le piston. Les moyens de pincement prennent appui sur la face opposée de la bague et une autre face d'accrochage également ménagée dans le piston. Les moyens élastiques de pincement se présentent sous la forme d'une attache annulaire pourvue de pattes en saillie dans des perçages axiaux ménagés dans le piston qui débouchent dans des perçages radiaux. La forme du piston est donc relativement complexe, ce qui est nuisible en termes de coût. En outre, le piston, l'attache, la rondelle élastique associée et la bague doivent être montés simultanément, ce qui complique le procédé d'assemblage.

Le document FR-A-2 611 244 décrit une butée de débrayage pourvue d'une pièce élastique servant à la fixation de la bague extérieure non tournante et de l'élément de manoeuvre. Cette pièce consiste en un anneau radial à partir duquel sont formées en saillie vers l'intérieur deux pattes diamétralement opposées comportant une portion essentiellement radiale oblique suivie d'une portion essentiellement axiale et également oblique, dirigée à l'opposé des éléments roulants et vers l'extérieur et se terminant par un rebord plié vers l'intérieur, en présentant ainsi une forme globale de S. Il n'est pas prévu de portion axiale. Les pattes sont montées dans une ouverture traversant un flasque d'un élément de manoeuvre également pourvu d'un manchon allongé axialement.

La présente invention propose de remédier à ces inconvénients.

La présente invention propose une butée de débrayage particulièrement robuste et fiable avec des éléments de forme relativement simple.

Le dispositif de butée de débrayage, selon un aspect de l'invention, est du type comprenant un élément de manoeuvre, et un palier à roulement muni d'une bague non tournante et d'une bague tournante, ledit palier à roulement étant solidaire axialement de l'élément de manoeuvre. Le dispositif comprend une bague annulaire de fixation pourvue d'une portion annulaire axiale montée dans l'élément de manoeuvre et d'une portion axialement élastique en appui axial sur la bague non tournante du côté axialement opposé à l'élément de manoeuvre, ladite bague annulaire étant apte à maintenir la bague non tournante solidaire axialement de l'élément de manoeuvre tout en autorisant un déplacement radial. La portion axiale de la bague de fixation est montée dans un alésage de l'élément de manoeuvre. On évite ainsi un accroissement de l'encombrement.

Un tel dispositif est capable d'agir sur un diaphragme de mécanisme d'embrayage.

Le montage de la butée est facile et pratique. La bague de fixation élastique peut être montée après l'assemblage du roulement, en venant s'encliqueter par un mouvement axial. L'élément de manoeuvre présente une forme simple et est donc robuste.

Avantageusement, ladite bague de fixation est monobloc. La bague de fixation est donc robuste et économique.

Dans un mode de réalisation de l'invention, la bague de fixation est en contact direct avec l'élément de manoeuvre.

Dans un mode de réalisation de l'invention, la portion élastique est sensiblement radiale et est inclinée vers la portion radiale de la bague non tournante. La portion élastique peut présenter une surface convexe du côté de la bague non tournante. La surface convexe peut frotter sur la bague non tournante lors de déplacements axiaux, sans usure excessive.

Dans un mode de réalisation de l'invention, une pluralité de trous sont ménagés dans la portion élastique. On augmente ainsi la souplesse axiale de la portion élastique.

La portion élastique peut comporter une pluralité de languettes axialement élastiques.

Dans un mode de réalisation de l'invention, la portion axiale de la bague de fixation comprend des languettes de fixation sur l'élément de manoeuvre. La bague de fixation peut être fixée sur l'élément de manoeuvre par un simple mouvement axial, les languettes de fixation présentant une certaine élasticité radiale.

Dans un mode de réalisation de l'invention, l'extrémité libre des languettes de fixation est en contact avec une surface solidaire de l'élément de manoeuvre.

Dans un mode de réalisation de l'invention, l'extrémité libre des languettes de fixation est en contact avec une surface sensiblement radiale de l'élément de manoeuvre. Ladite surface sensiblement radiale peut être formée par une nervure annulaire formée dans l'alésage de l'élément de manoeuvre.

En d'autres termes, la bague de fixation peut consister en une portion axiale montée dans l'élément de manoeuvre et supportant des languettes élastiques, et en une portion élastique axialement de maintien de la bague non tournante.

Dans un mode de réalisation de l'invention, le dispositif comprend une bague supplémentaire de fixation solidaire de l'élément de manoeuvre.

Dans un mode de réalisation de l'invention, la bague supplémentaire de fixation comprend une portion axiale et une portion radiale en contact avec l'élément de manoeuvre.

Dans un mode de réalisation de l'invention, la portion radiale de la bague supplémentaire de fixation est en contact avec la bague non tournante. On évite ainsi un contact entre l'élément de manoeuvre et la bague non tournante.

Dans un mode de réalisation de l'invention, la bague supplémentaire de fixation comprend des languettes de fixation sur l'élément de manoeuvre, lesdites languettes étant issues de ladite portion axiale.

Dans un mode de réalisation de l'invention, la portion axiale de la bague supplémentaire de fixation entoure une partie de l'élément de manoeuvre.

Dans un mode de réalisation de l'invention, la bague supplémentaire de fixation comprend une surface de retenue de la bague de fixation.

En d'autres termes, la bague supplémentaire de fixation peut consister en une coupelle annulaire à section en L, avec une portion axiale montée autour de l'élément de manoeuvre et supportant des languettes élastiques, et une portion radiale de contact avec la bague non tournante et de retenue de la bague de fixation. La retenue de la bague de fixation peut s'effectuer par contact de l'extrémité libre des languettes de la bague de fixation avec une surface de la portion radiale à proximité de son extrémité de petit diamètre.

Dans un mode de réalisation de l'invention, la bague non tournante comprend une portion radiale dirigée vers l'intérieur, disposée axialement entre la portion élastique de la bague de fixation et une surface solidaire de l'élément de manoeuvre. Ladite surface solidaire de l'élément de manoeuvre peut être une surface de la bague supplémentaire ou une surface de l'élément de manoeuvre lui même. La bague non tournante peut présenter un diamètre minimum légèrement supérieur, par exemple de quelques dizièmes de millimètres ou quelques millimètres au diamètre extérieur de la deuxième portion axiale.

La portion axiale de la bague de fixation peut passer dans la zone de moindre diamètre de la bague non tournante.

Dans un mode de réalisation de l'invention, la bague non tournante est en contact direct avec la portion élastique de la bague de fixation.

Dans un mode de réalisation de l'invention, le dispositif comprend un élément d'étanchéité solidaire de la bague non tournante et en contact avec la portion élastique de la bague de fixation. L'élément d'étanchéité peut former un passage étroit avec la bague tournante.

Dans un mode de réalisation de l'invention, l'élément de manoeuvre est un poussoir hydraulique.

L'invention propose également un système de commande d'embrayage équipé d'un dispositif de butée de débrayage du type comprenant un élément de manoeuvre, un palier à roulement muni d'une bague non tournante et d'une bague tournante en contact avec un diaphragme, ledit palier à roulement étant solidaire axialement de l'élément de manoeuvre. Le dispositif comprend une bague annulaire de fixation pourvue d'une portion annulaire axiale montée dans l'élément de manoeuvre et d'une portion élastique axialement en appui sur la bague non tournante du côté axialement opposé à l'élément de manoeuvre, ladite bague annulaire étant apte à maintenir la bague non tournante solidaire axialement de l'élément de manoeuvre tout en autorisant un déplacement radial.

La bague de fixation est économique à fabriquer, facile à mettre en place par un simple mouvement axial et peu encombrante.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'une butée de débrayage selon un aspect de l'invention ;
- la figure 2 est une vue en perspective de la bague de fixation;
- la figure 3 est une vue en perspective de la bague supplémentaire de fixation;
- la figure 4 est une demi-vue en coupe axiale d'une butée de débrayage selon un autre mode de réalisation de l'invention; et
- la figure 5 est une demi-vue en coupe axiale d'une butée de débrayage selon un autre mode de réalisation de l'invention.

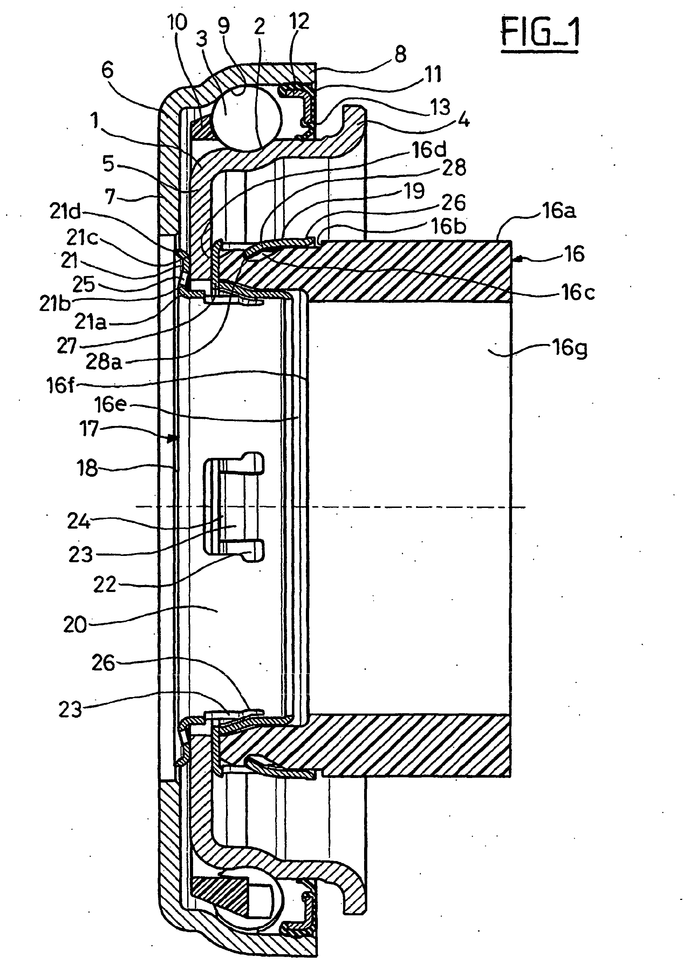

Comme on peut le voir sur la figure 1, la butée de débrayage comprend une bague non tournante de roulement 1 à paroi mince réalisée par emboutissage d'une tôle ou d'un tube présentant un chemin de roulement circulaire en forme de portion de tore 2 pour une rangée d'éléments roulants, ici des billes 3, ledit chemin présentant une section axiale méridienne à profil en arc de cercle concave. La bague intérieure 1 comporte une portion radiale 4 dirigée vers l'extérieur et une portion radiale 5 dirigée vers l'intérieur, lesdites portions radiales 4 et 5 étant disposées d'un côté et de l'autre des éléments roulants 3. La bague non tournante 1 est une bague intérieure. En variante, la bague non tournante 1 peut être une bague extérieure.

Le palier à roulement se complète par une bague extérieure 6 présentant une portion radiale 7 en saillie vers l'intérieur de l'ensemble et une portion cylindrique 8 du côté de la portion radiale 4. La portion radiale 7 est capable de venir en contact avec la surface d'un diaphragme ou d'un élément équivalent, non représenté, permettant l'actionnement d'un embrayage, notamment de véhicule automobile. La bague extérieure 6 comprend également une paroi mince qui peut être réalisée par emboutissage d'une tôle ou d'un tube. La bague extérieure 6 présente un chemin de roulement circulaire 9, en forme de portion de tore, pour la rangée d'éléments roulants 3, ledit chemin présentant en section axiale méridienne un profil en arc de cercle concave. Les éléments roulants 3 sont maintenus par une cage 10 entre le chemin de roulement 2 de la bague intérieure 1 et le chemin de roulement 9 de la bague extérieure 6. Le roulement à billes se complète par un organe d'étanchéité 11 monté de manière étanche dans la portion cylindrique 8 de la bague extérieure 5 et comprenant une armature 12 et une partie souple 13 venant frotter sur une portée cylindrique de la bague non tournante 1.

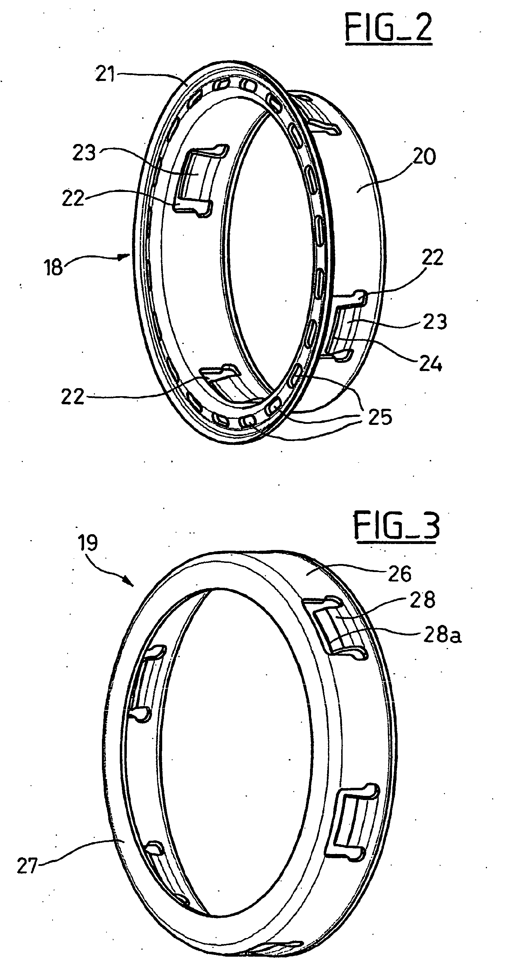

La butée de débrayage se complète par un élément de manoeuvre 16, visible sur la figure 2. L'élément de manoeuvre 16 peut être une pièce distincte de l'organe de commande actionnant le dispositif ou faire partie intégrante de celui-ci. L'élément de manoeuvre 16 peut être constitué, par exemple, par le piston hydraulique d'un dispositif de butée de débrayage à commande hydraulique.

La butée de débrayage comprend également un moyen de solidarisation axiale 17 entre l'élément de manoeuvre 16 et le roulement de butée, plus précisément la bague non tournante 1. Le moyen de solidarisation axiale 17 est du type permettant un certain déplacement radial de la bague non tournante 1 du roulement de butée par rapport à l'élément de manoeuvre 16.

Plus précisément, l'élément de manoeuvre 16 se présente sous la forme d'une portion de tube réalisée en matériau synthétique pourvu d'un alésage cylindrique et d'une surface extérieure 16a également cylindrique et entourée à une certaine distance par le ressort. Toutefois, l'extrémité de l'élément de manoeuvre 16, du côté du moyen de solidarisation axiale 17, présente un diamètre extérieur légèrement réduit avec un épaulement 16b et une rainure annulaire 16c. La rainure annulaire 16c ouverte vers l'extérieur peut présenter un rebord sensiblement radial à l'opposé de l'épaulement 16b. Une surface radiale 16d forme l'extrémité frontale de l'élément de manoeuvre 16 du côté du moyen de solidarisation axiale 17. L'alésage de l'élément de manoeuvre 16 est étagé et comprend une portion de grand diamètre 16e du côté du moyen de solidarisation axiale 17, un épaulement 16f, et une portion de petit diamètre 16g à l'opposé du moyen de solidarisation axiale 17.

Comme on peut le voir sur la figure 1, le moyen de solidarisation axiale 17 comprend une bague de fixation 18 et une bague supplémentaire 19, distinctes l'une de l'autre.

La bague de fixation 18 se présente sous la forme d'une pièce monobloc réalisée en tôle, de forme générale annulaire à section en L. La bague de fixation 18 comprend une portion annulaire axiale 20, et une portion axialement élastique 21. La portion axiale 20 est disposée dans l'alésage de la portion radiale 5 de la bague non tournante 1 et en contact avec la portion de grand diamètre 16e de l'alésage de l'élément de manoeuvre 16, axialement au niveau des éléments roulants 3. La portion axiale 20 fait saillie au-delà de la portion radiale 5 et se prolonge par la portion élastique 21. La différence de diamètre entre la portion axiale 20 et l'alésage de la portion radiale 5 autorise un certain déplacement radial du roulement de butée par rapport à l'élément de manoeuvre 16 et permet ainsi l'autoalignement du roulement par rapport au diaphragme de l'embrayage.

Dans la portion axiale 20, sont formées par découpe une pluralité de fenêtres 22 en forme de U, laissant subsister des languettes 23 présentant une certaine élasticité radiale, se rattachant à la portion axiale 20 du côté de son extrémité libre, à proximité de l'épaulement 16f. Les languettes 23 comprennent une extrémité libre 24 légèrement pliée en oblique vers l'extérieur. Les extrémités libres des languettes 23 sont dirigées vers la partie frontale de la butée. On entend par partie frontale de la butée, la partie destinée à venir en contact avec le diaphragme.

La portion élastique 21 s'étend vers l'extérieur à partir de la portion axiale 20 et présente un diamètre maximal supérieur l'alésage de la portion radiale 5 pour interférer avec ladite portion radiale 5. La portion élastique 21 présente une forme générale radiale, légèrement inclinée vers la portion radiale 5, avec une zone concave 21a du côté de la portion radiale 5 à proximité de la portion axiale 20, puis une zone tronconique 21b, puis une zone convexe 21c apte à venir en contact sur la portion radiale 5 avec de possibles glissements radiaux relatifs dus à l'autoalignement, et un rebord extérieur 21d déjeté à l'opposé de la portion radiale 5. Une pluralité de fenêtres 25 sont ménagées dans la portion élastique 21 sensiblement au niveau de la zone tronconique. Les fenêtres 25 permettent d'augmenter la souplesse axiale de la portion élastique 21.

Alternativement, la portion élastique peut être découpée en une pluralité de languettes venant en contact avec la portion radiale 5. Les languettes peuvent être issues d'un bord intérieur et dirigées vers l'extérieur ou être issues d'un bord extérieur et dirigées vers l'intérieur.

La bague supplémentaire de fixation 19 se présente sous la forme d'une pièce monobloc réalisée en tôle emboutie, de forme générale annulaire à section en L. La bague supplémentaire 19 comprend une portion axiale annulaire 26, et une portion radiale annulaire 27 s'étendant vers l'intérieur à partir de la portion axiale 26 en faisant saillie au-delà de la portion de grand diamètre 16e de l'alésage de l'élément de manoeuvre 16. La portion radiale 27 sert de surface de butée aux extrémités libres 24 des languettes 23 pour le maintien axial de la bague de fixation 18. La portion radiale 27 est en contact d'un côté avec la surface frontale radiale d'extrémité de l'élément de manoeuvre 16 et les extrémités libres 24 des languettes 23, et de l'autre côté avec la portion radiale 5 de la bague non tournante 1.

La portion axiale 26 est montée autour de l'extrémité libre de diamètre réduit de l'élément de manoeuvre 16. L'extrémité libre de la portion axiale 26 est située à faible distance de l'épaulement 16b. Dans la portion axiale 26, sont formées une pluralité de découpes en forme de U, laissant subsister autant de languettes 28 dont l'extrémité libre est dirigée axialement vers la portion radiale 27 et radialement vers l'intérieur. En d'autres termes, les découpes laissent subsister de la portion axiale 26, une portion annulaire continue, distante de la portion radiale 27, et une portion dans laquelle sont formées les languettes 28. La bague de fixation 18 et l'élément de manoeuvre 16 peuvent présenter des diamètres intérieurs sensiblement identiques.

Les languettes 28 font saillie dans la rainure annulaire 16c avec leurs extrémités libres 28a venant en contact de butée contre la surface radiale de ladite rainure annulaire 16c du côté opposé à l'épaulement 16b. La bague supplémentaire 19 et l'élément de manoeuvre 16 peuvent présenter des diamètres extérieurs sensiblement identiques, afin d'éviter les aspérités susceptibles de nuire à la facilité de montage. La bague supplémentaire 19 et l'élément de manoeuvre 16 peuvent se fixer l'un sur l'autre par un simple mouvement axial. Les extrémités libres 28a des languettes 28 sont capables de s'effacer vers l'extérieur avant de rentrer dans la rainure annulaire 16c en reprenant au moins en partie leur position d'origine à l'état libre, garantissant ainsi la solidarisation de la bague supplémentaire 19 et de l'élément de manoeuvre 16, de façon sûre.

Le montage peut s'effectuer de la façon suivante. On amène par un mouvement axial l'élément de manoeuvre 16 dans la bague supplémentaire 19, la portion axiale 26 entourant l'extrémité libre de diamètre réduit de l'élément de manoeuvre 16. Les languettes 28 s'effacent vers l'extérieur pour franchir le rebord de la rainure 16c, puis se rabattent vers l'intérieur par élasticité dans la rainure 16c en s'encliquetant.

On amène ensuite par un mouvement axial la bague non tournante 1, la portion radiale 5 venant en contact avec la portion radiale 27 de la bague supplémentaire 19. La portion axiale 26 se trouve alors sensiblement au niveau axial des éléments roulants 3.

On amène ensuite par un mouvement axial la bague de fixation 18 du côté opposé de la portion radiale 5 de la bague non tournante 1. La portion axiale 20 passe dans l'alésage de la portion radiale 5 de la bague non tournante 1, dans l'extrémité libre de la portion radiale 27 de la bague supplémentaire 19 et dans la portion de grand diamètre 16e de l'élément de manoeuvre 16. Les languettes 23 s'effacent vers l'intérieur en franchissant l'extrémité libre de la portion radiale 27 de la bague supplémentaire 19. La portion élastique 21 entre en contact avec la portion radiale 5 de la bague non tournante 1.

Il est alors nécessaire d'exercer un certain effort axial pour déformer élastiquement la portion élastique 21 afin de poursuivre le mouvement axial. Les languettes 23 par élasticité s'écartent alors vers l'extérieur en contact avec l'alésage de la portion de grand diamètre 16e de l'élément de manoeuvre 16 après que les extrémités libres 24 des languettes 23 ont franchi l'extrémité libre de la portion radiale 27. Les extrémités libres 24 des languettes 23 alors entrent alors en contact de butée avec la portion radiale 27 empêchant ainsi une séparation de la bague de fixation 18, du sous-ensemble formé par la bague supplémentaire 19, la bague non tournante 1, et l'élément de manoeuvre 16. La bague non tournante 1 est maintenue axialement avec une légère précontrainte entre d'un côté la portion élastique 21, et de l'autre côté la portion radiale de la bague supplémentaire 19, tout en conservant un jeu radial grâce à la différence de diamètre entre la portion axiale 20 de la bague de fixation 18 et l'alésage de la portion radiale 5.

En variante, on peut prévoir d'amener l'élément de manoeuvre 16 en dernier sur un sous ensemble comprenant la bague non tournante 1, la bague de fixation 18 et la bague supplémentaire 19.

On comprend que ce type de montage est particulièrement simple, avec un premier mouvement axial pour disposer la bague supplémentaire 19 sur l'élément de manoeuvre 16 et un second mouvement axial pour mettre en position la bague de fixation 18. On s'affranchit de toute étape de pliage d'un rebord lors de l'assemblage de ces éléments.

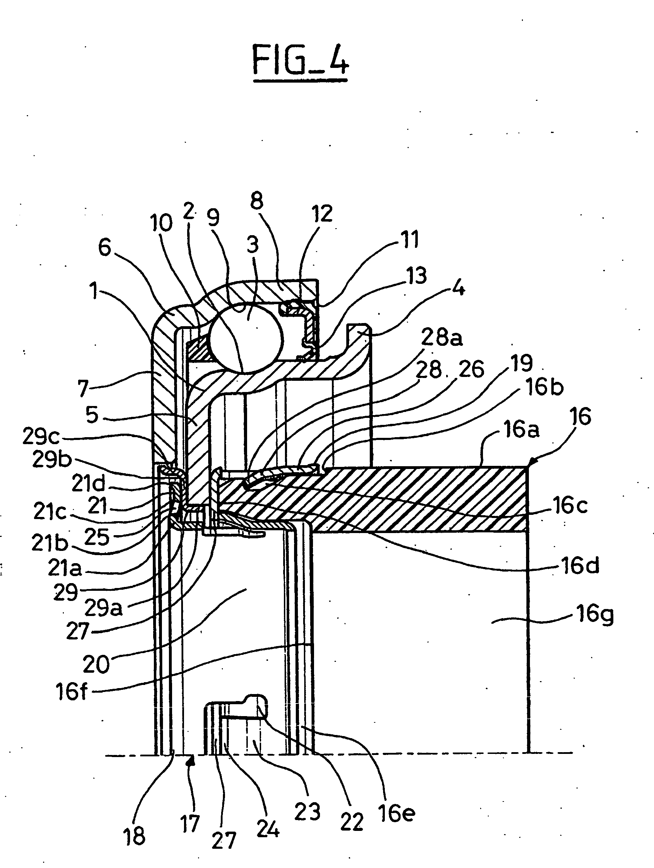

Dans le mode de réalisation illustré sur la figure 4, il est prévu en outre un organe d'étanchéité 29, de forme annulaire, comprenant une première portion axiale 29a disposée en contact avec l'alésage de la portion radiale 5 de la bague non tournante 1. La première portion axiale 29a peut être emmanchée ou simplement centrée dans ledit alésage. L'organe d'étanchéité 29 se complète par une portion radiale 29b en contact, d'un côté, avec la portion radiale 5 et, du côté opposé, avec le bord extérieur de la portion élastique 21 de la bague de fixation 18, et une deuxième portion axiale 29c dirigée à l'opposé de la portion radiale 5 et formant un passage étroit avec l'extrémité libre de la portion radiale 7 de la bague tournante 6 pour améliorer l'étanchéité du roulement. En d'autres termes, la bague de fixation 18 est en contact avec un élément monté sur la bague non tournante 1, cet élément assurant l'étanchéité entre les bagues tournante et non tournante.

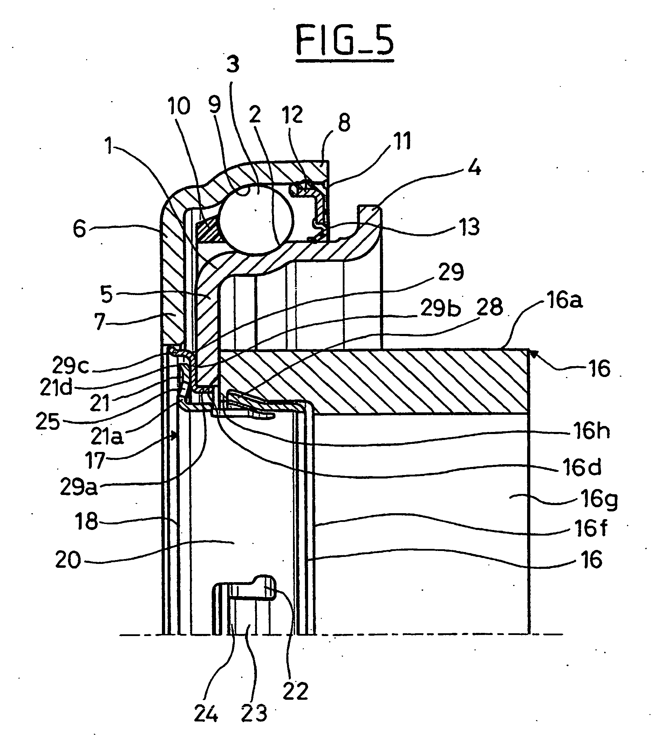

Dans le mode de réalisation illustré sur la figure 5, la bague supplémentaire est supprimée. La portion radiale 5 de la bague non tournante 1 est en contact direct avec la surface radiale d'extrémité de l'élément de manoeuvre 16. L'élément de manoeuvre 16 est pourvu d'une nervure annulaire 16h en saillie vers l'intérieur, adjacente à la surface radiale d'extrémité, et limitant la portion de grand diamètre 16e. La nervure 16h sert de butée aux extrémités libres 24 des languettes 23. Un organe d'étanchéité 29 est prévu. Toutefois, on pourrait envisager un dispositif selon la figure 6 dépourvu d'organe d'étanchéité 29 comme celui de la figure 1. La surface extérieure 16a de l'élément de manoeuvre 16 est cylindrique.

Grâce à l'invention, on réalise un système de fixation du roulement de butée et d'auto-centrage très compact et facile à assembler, même de façon automatique. De simples mouvements axiaux suffisent au montage qui est donc économique et fiable. L'élément de manoeuvre est de forme simple et donc robuste.

## Revendications

1. Dispositif de butée de débrayage, du type comprenant un élément de manoeuvre (16), un palier à roulement muni d'une bague non tournante (1) et d'une bague tournante (6), ledit palier à roulement étant solidaire axialement de l'élément de manoeuvre (16) et une bague annulaire de fixation (18) pourvue d'une portion montée dans l'élément de manoeuvre et d'une portion axialement élastique (21), ladite bague de fixation (18) étant apte à maintenir la bague non tournante solidaire axialement de l'élément de manoeuvre (16) tout en autorisant un déplacement radial, **caractérisé par le fait que** la portion montée dans l'élément de manoeuvre est une portion annulaire axiale et est montée dans un alésage de l'élément de manoeuvre (16), la portion axialement élastique étant en appui axial sur la bague non tournante (1) du côté axialement opposé à l'élément de manoeuvre (16).

2. Dispositif selon la revendication 1, **caractérisé par le fait que** ladite bague de fixation (18) est en contact direct avec l'élément de manoeuvre.

3. Dispositif selon l'une quelconque des revendications précédentes, **caractérisé par le fait que** la portion élastique (21) est sensiblement radiale et est inclinée vers la portion radiale (5) de la bague non tournante (1).

4. Dispositif selon l'une quelconque des revendications précédentes, **caractérisé par le fait que** la portion élastique (21) présente une surface convexe du côté de la bague non tournante.

5. Dispositif selon l'une quelconque des revendications précédentes, **caractérisé par le fait qu'**une pluralité de trous (25) sont ménagés dans la portion élastique (21).

6. Dispositif selon l'une quelconque des revendications précédentes, **caractérisé par le fait que** la portion élastique (21) comporte une pluralité de languettes axialement élastiques.

7. Dispositif selon l'une quelconque des revendications précédentes, **caractérisé par le fait que** la bague de fixation (18) est monobloc.

8. Dispositif selon l'une quelconque des revendications précédentes, **caractérisé par le fait que** la portion axiale de la bague de fixation (18) comprend des languettes de fixation (23) sur l'élément de manoeuvre.

9. Dispositif selon la revendication 8, **caractérisé par le fait que** l'extrémité libre (24) des languettes de fixation (23) est en contact avec une surface solidaire de l'élément de manoeuvre.

10. Dispositif selon la revendication 9, **caractérisé par le fait que** l'extrémité libre (24) des languettes de fixation est en contact avec une surface sensiblement radiale de l'élément de manoeuvre.

11. Dispositif selon l'une quelconque des revendications précédentes, **caractérisé par le fait qu'**il comprend une bague supplémentaire de fixation (19) solidaire de l'élément de manoeuvre.

12. Dispositif selon la revendication 11, **caractérisé par le fait que** la bague supplémentaire de fixation (19) comprend une portion axiale (26) et une portion radiale (27) en contact avec l'élément de . manoeuvre.

13. Dispositif selon la revendication 12, **caractérisé par le fait que** la portion radiale (27) de la bague supplémentaire de fixation (19) est en contact avec la bague non tournante (1).

14. Dispositif selon la revendication 12 ou 13, **caractérisé par le fait que** la bague supplémentaire de fixation (19) comprend des languettes de fixation (28) sur l'élément de manoeuvre, lesdites languettes étant issues de ladite portion axiale (26).

15. Dispositif selon l'une quelconque des revendications 12 à 14, **caractérisé par le fait que** la portion axiale (26) de la bague supplémentaire de fixation (19) entoure une partie de l'élément de manoeuvre.

16. Dispositif selon l'une quelconque des revendications 11 à 15, **caractérisé par le fait que** la bague supplémentaire de fixation (19) comprend une surface de retenue de la bague de fixation (18).

17. Dispositif selon l'une quelconque des revendications précédentes, **caractérisé par le fait que** la bague non tournante (1) comprend une portion radiale (4) dirigée vers l'intérieur, disposée axialement entre la portion élastique (21) de la bague de fixation (18) et une surface solidaire de l'élément de manoeuvre (16).

18. Dispositif selon l'une quelconque des revendications précédentes, **caractérisé par le fait que** la bague non tournante (1) est en contact direct avec la portion élastique (21) de la bague de fixation (18).

19. Dispositif selon l'une quelconque des revendications 1 à 18, **caractérisé par le fait qu'**il comprend un élément d'étanchéité (29) solidaire de la bague non tournante et en contact avec la portion élastique (21) de la bague de fixation (18).

20. Dispositif selon l'une quelconque des revendications précédentes, **caractérisé par le fait que** l'élément de manoeuvre (16) est un poussoir hydraulique.

21. Système de commande d'embrayage comprenant un dispositif selon l'une quelconque des revendications précédentes.

## Claims

1. Clutch release bearing device, of the type comprising an operating element (16), a rolling bearing equipped with a non-rotating race (1) and a rotating race (6), the said rolling bearing being secured axially to the operating element (16), and an annular fixing ring (18) provided with a portion mounted in the operating element and with an axially elastic portion (21), the said fixing ring (18) being able to hold the non-rotating race axially secured to the operating element (16) while at the same time allowing radial movement, **characterized in that** the portion mounted in the operating element is an axial annular portion and is mounted in a bore of the operating element (16), the axially elastic portion bearing axially on the non-rotating race (1) on the side axially opposed to the operating element (16).

2. Device according to Claim 1, **characterized in that** the said fixing ring (18) is in direct contact with the operating element.

3. Device according to either one of the preceding claims, **characterized in that** the elastic portion (21) is substantially radial and is inclined towards the radial portion (5) of the non-rotating race (1).

4. Device according to any one of the preceding claims, **characterized in that** the elastic portion (21) has a convex surface on the same side as the non-rotating race.

5. Device according to any one of the preceding claims, **characterized in that** a plurality of holes (25) are formed in the elastic portion (21).

6. Device according to any one of the preceding claims, **characterized in that** the elastic portion (21) comprises a plurality of axially elastic tabs.

7. Device according to any one of the preceding claims, **characterized in that** the fixing ring (18) is of one piece.

8. Device according to any one of the preceding claims, **characterized in that** the axial portion of the fixing ring (18) comprises fixing tabs (23) for fixing to the operating element.

9. Device according to Claim 8, **characterized in that** the free end (24) of the fixing tabs (23) is in contact with a surface secured to the operating element.

10. Device according to Claim 9, **characterized in that** the free end (24) of the fixing tabs is in contact with a substantially radial surface of the operating element.

11. Device according to any one of the preceding claims, **characterized in that** it comprises an additional fixing ring (19) secured to the operating element.

12. Device according to Claim 11, **characterized in that** the additional fixing ring (19) comprises an axial portion (26) and a radial portion (27) in contact with the operating element.

13. Device according to Claim 12, **characterized in that** the radial portion (27) of the additional fixing ring (19) is in contact with the non-rotating race (1).

14. Device according to Claim 12 or 13, **characterized in that** the additional fixing ring (19) comprises fixing tabs (28) for fixing to the operating element, the said tabs originating from the said axial portion (26).

15. Device according to any one of Claims 12 to 14, **characterized in that** the axial portion (26) of the additional fixing ring (19) surrounds a part of the operating element.

16. Device according to any one of Claims 11 to 15, **characterized in that** the additional fixing ring (19) comprises a retaining surface for retaining the fixing ring (18).

17. Device according to any one of the preceding claims, **characterized in that** the non-rotating race (1) comprises an inwardly facing radial portion (4) arranged axially between the elastic portion (21) of the fixing ring (18) and a surface secured to the operating element (16).

18. Device according to any one of the preceding claims, **characterized in that** the non-rotating race (1) is in direct contact with the elastic portion (21) of the fixing ring (18).

19. Device according to any one of Claims 1 to 17, **characterized in that** it comprises a sealing element (29) secured to the non-rotating race and in contact with the elastic portion (21) of the fixing ring (18).

20. Device according to any one of the preceding claims, **characterized in that** the operating element (16) is a hydraulic pusher.

21. Clutch control system comprising a device according to any one of the preceding claims.

## Patentansprüche

1. Kupplungsausrücklagervorrichtung, zu der gehören: ein Ausrückelement (16), ein Wälzlager, das mit einem stillstehenden Ring (1) und einem umlaufenden Ring (6) versehen ist, wobei das Wälzlager in axialer Richtung mit dem Ausrückelement (16) starr verbunden ist, und ein ringförmiger Befestigungsring (18), der mit einem in dem Ausrückelement befestigten Abschnitt und mit einem in axialer Richtung elastischen Abschnitt (21) ausgebildet ist, wobei der Befestigungsring (18) dazu dient, den stillstehenden Ring an dem Ausrückelement (16) in axialer Richtung zu sichern, wobei eine radiale Versetzung ermöglicht ist, **dadurch gekennzeichnet, dass** der in dem Ausrückelement befestigte Abschnitt ein ringförmiger axialer Abschnitt ist und in einem zylindrischen Innenraum des Ausrückelements (16) angebracht ist, und dass der axial elastische Abschnitt an dem stillstehenden Ring (1) an jener Seite anliegt, die von dem Betätigungselement (16) abliegt.

2. Vorrichtung nach Anspruch 1, **dadurch gekennzeichnet, dass** der Befestigungsring (18) mit dem Ausrückelement in unmittelbarer Berührung steht.

3. Vorrichtung nach einem der vorhergehenden Ansprüche, **dadurch gekennzeichnet, dass** der elastische Abschnitt (21) im Wesentlichen radial ist und gegen den radialen Abschnitt (5) des stillstehenden Rings (1) geneigt ist.

4. Vorrichtung nach einem der vorhergehenden Ansprüche, **dadurch gekennzeichnet, dass** der elastische Abschnitt (21) auf der Seite des stillstehenden Rings eine konvexe Fläche aufweist.

5. Vorrichtung nach einem der vorhergehenden Ansprüche, **dadurch gekennzeichnet, dass** in dem elastischen Abschnitt (21) eine Anzahl von Öffnungen (25) ausgebildet sind.

6. Vorrichtung nach einem der vorhergehenden Ansprüche, **dadurch gekennzeichnet, dass** der elastische Abschnitt (21) eine Anzahl von in axialer Richtung elastischen Zungen enthält.

7. Vorrichtung nach einem der vorhergehenden Ansprüche, **dadurch gekennzeichnet, dass** der Befestigungsring (18) einstückig hergestellt ist.

8. Vorrichtung nach einem der vorhergehenden Ansprüche, **dadurch gekennzeichnet, dass** der axiale Abschnitt des Befestigungsrings (18) Befestigungszungen (23) zur Befestigung an dem Ausrückelement aufweist.

9. Vorrichtung nach Anspruch 8, **dadurch gekennzeichnet, dass** das freie Ende (24) der Befestigungszungen (23) mit einer starr mit dem Ausrückelement verbundenen Fläche in Berührung steht.

10. Vorrichtung nach Anspruch 9, **dadurch gekennzeichnet, dass** das freie Ende (24) der Befestigungszungen mit einer im Wesentlichen radial sich erstreckenden Fläche des Ausrückelements in Berührung steht.

11. Vorrichtung nach einem der vorhergehenden Ansprüche, **dadurch gekennzeichnet, dass** zu der Vorrichtung ein starr mit dem Ausrückelement verbundener zusätzlicher Befestigungsring (19) gehört.

12. Vorrichtung nach Anspruch 11, **dadurch gekennzeichnet, dass** der zusätzliche Befestigungsring (19) einen axialen Abschnitt (26) und einen mit dem Ausrückelement in Berührung stehenden radialen Abschnitt (27) aufweist.

13. Vorrichtung nach Anspruch 12, **dadurch gekennzeichnet, dass** der radiale Abschnitt (27) des zusätzlichen Befestigungsrings (19) mit dem stillstehenden Ring (1) in Berührung steht.

14. Vorrichtung nach Anspruch 12 oder 13, **dadurch gekennzeichnet, dass** der zusätzliche Befestigungsring (19) Befestigungszungen (28) zur Befestigung an dem Ausrückelement aufweist, wobei die Zungen mit dem axialen Abschnitt (26) einstückig ausgebildet sind.

15. Vorrichtung nach einem der Ansprüche 12 bis 13, **dadurch gekennzeichnet, dass** der axiale Abschnitt (26) des zusätzlichen Befestigungsrings (19) einen Abschnitt des Ausrückelements umgibt.

16. Vorrichtung nach einem der Ansprüche 11 bis 15, **dadurch gekennzeichnet, dass** der zusätzliche Befestigungsring (19) eine Haltefläche hinsichtlich des Befestigungsrings (18) enthält.

17. Vorrichtung nach einem der vorhergehenden Ansprüche, **dadurch gekennzeichnet, dass** der stillstehende Ring (1) einen nach innen gerichteten radial sich erstreckenden Abschnitt (4) aufweist, der in axialer Richtung zwischen dem elastischen Abschnitt (21) des Befestigungsrings (18) und einer starr mit dem Ausrückelement verbundenen Fläche (16) angeordnet ist.

18. Vorrichtung nach einem der vorhergehenden Ansprüche, **dadurch gekennzeichnet, dass** der stillstehende Ring (1) unmittelbar mit dem elastischen Abschnitt (21) des Befestigungsrings (18) in Berührung steht.

19. Vorrichtung nach einem der Ansprüche 1 bis 18, **dadurch gekennzeichnet, dass** zu der Vorrichtung ein Dichtungselement (29) gehört, das starr mit dem stillstehenden Ring verbunden ist und mit dem elastischen Abschnitt (21) des Befestigungsrings (18) in Berührung steht.

20. Vorrichtung nach einem der vorhergehenden Ansprüche, **dadurch gekennzeichnet, dass** das Ausrückelement (16) ein hydraulischer Stößel ist.

21. Kupplungsbetätigungssystem, das eine Vorrichtung nach einem der vorhergehenden Ansprüche enthält.
